(19) Europäisches Patentamt

European Patent Office

Office européen des brevets

(11) Veröffentlichungsnummer: **0 167 907 B1**

(12) **EUROPÄISCHE PATENTSCHRIFT**

(45) Veröffentlichungstag der Patentschrift: **11.03.92**

(21) Anmeldenummer: **85107731.3**

(22) Anmeldetag: **22.06.85**

(51) Int. Cl.⁵: **C08G  69/18**

Die Akte enthält technische Angaben, die nach
dem Eingang der Anmeldung eingereicht wurden
und die nicht in dieser Patentschrift enthalten sind.

(54) **Aktivierte anionische Polymerisation von Lactamen.**

(30) Priorität: **10.07.84 DE 3425318**

(43) Veröffentlichungstag der Anmeldung:
**15.01.86 Patentblatt  86/03**

(45) Bekanntmachung des Hinweises auf die
Patenterteilung:
**11.03.92 Patentblatt  92/11**

(84) Benannte Vertragsstaaten:
**BE CH DE FR GB IT LI NL**

(56) Entgegenhaltungen:
**EP-A- 0 003 729**
**EP-A- 0 088 560**
**FR-A- 2 362 179**
**GB-A- 863 859**
**US-A- 3 671 501**

**PATENT ABSTRACTS OF JAPAN, Band 8, Nr.
212 (C-244)[1649], 27. September 1984; & JP -
A - 59 100 134 (UBE KOSAN K.K.) 09.06.1984
(Kat. A)**

(73) Patentinhaber: **BAYER AG**

**W-5090 Leverkusen 1 Bayerwerk(DE)**

(72) Erfinder: **Meyer, Rolf-Volker, Dr.
Buchheimer Strasse 23
W-4150 Krefeld(DE)**
Erfinder: **Fahnler, Friedrich, Dipl.-Ing.
Wimmersweg 60
W-4150 Krefeld(DE)**
Erfinder: **Dhein, Rolf, Dr.
Deswatinesstrasse 30
W-4150 Krefeld(DE)**
Erfinder: **Michael, Dietrich, Dr.
Deswatinesstrasse 57
W-4150 Krefeld(DE)**

**Beschreibung**

Gegenstand der Erfindung ist ein Verfahren zur Herstellung von Polyamiden durch aktivierte anionische Polymerisation von Lactamen unter Einsatz von Biuretgruppen-haltigen Polyisocyanaten als Aktivatoren.

Die aktivierte anionische Polymerisation von Lactamen wird zur Herstellung von Polyamidformkörpern nach den unterschiedlichsten Verfahrenstechniken eingesetzt. Der störungsfreie Verlauf der Polymerisation sowie die Qualität der nach den verschiedenen Verfahren hergestellten Polyamide hängt nicht nur vom Katalysator, sondern in bedeutendem Maße auch von der Art des verwendeten Aktivators ab.

Eine Vielzahl von Verbindungen sind als Aktivatoren bei der anionischen Polymerisation von Lactamen eingesetzt worden, so z. B. Acyl-Lactame, substituierte Triazine, Carbodiimide, Cyanamide, Isocyanate sowie die entsprechenden maskierten Isocyanatverbindungen. Prinzipiell können die Aktivatoren mono- oder polyfunktionell sein, wobei polyfunktionelle Aktivatoren bekanntermaßen zu höhermolekularen, zum Teil vernetzten Produkten führen.

In der Praxis vielfach eingesetzte Aktivatoren sind Polyisocyanate, bevorzugt Diisocyanate. Besonders bevorzugt wird Hexamethylendiisocyanat verwendet, da die leicht bewegliche Flüssigkeit besonders bei den kontinuierlichen Verfahrensweisen, bei denen es auf genau bemessene Zufuhr über Dosierpumpen ankommt, große Vorteile bietet. Von erheblichem Nachteil ist jedoch die Toxizität des Hexamethylendiisocyanat infolge des hohen Dampfdrucks (3 Torr bei 102°C, 20 Torr bei 143°C), die bei jeder Operation besondere Vorsichtsmaßnahmen erforderlich macht. Dies gilt besonders im Falle möglicher Betriebsstörungen, die ein Öffnen von Pumpen und Zuleitungen erfordern.

Das in der DAS 1 420 241 vorgeschlagene Hexamethylenbiscarbamido-caprolactam ist zwar physiologisch unbedenklich, aber, wie praktisch alle mit Lactamen diverkappten Diisocyanate, als kristalline Substanz für die kontinuierliche Fahrweise praktisch nicht einsetzbar.

Die Verwendung von Schmelzen ist wegen der dadurch bedingten Notwendigkeit beheizter Pumpen- und Rohrleitungen sowie durch mögliche Rückspaltung der maskierten Isocyanate nachteilig.

In der US 3 671 501 werden Biurete, jedoch keine Biuret-polyisocyanate genannt. Es sind relativ niedermolekulare, z.T. kristalline Substanzen, welche die Aktivität von Isocyanaten erreichen können.

Allophanatgruppen-haltige Polyisocyanate, hergestellt aus nicht-aromatischen Diisocyanaten und Alkoholen (DOS 2 729 990) sind zwar leichtfließend und weitgehend frei von monomerem Diisocyanat einstellbar und eignen sich prinzipiell gut zum Einsatz als Aktivatoren bei der anion. Polymerisation von Lactamen (EP 3729).

Die mit Allophanatgruppen modifizierten Polyisocyanaten als Aktivatoren hergestellten Polyamide haben jedoch Molgewichte, die vergleichsweise niedrig sind und nicht immer allen technischen Ansprüchen genügen.

Überraschend wurde nun gefunden, daß Biuretgruppen-haltige Polyisocyanate aus nicht aromatischen Diisocyanaten besonders hochwertige Aktivatoren für die anionische Polymerisation von Lactamen darstellen, da sie flüssig und somit leicht dosierfähig, weitestgehend Diisocyanat-frei und damit bezüglich toxikologischer Gefährdung leicht handhabbar sind und zu Polyamiden mit sehr hohem Molekulargewicht führen.

Überraschend ist auch, daß zudem die Viskosität der Biuretgruppen-haltigen Polyisocyanate mit N-Alkyllactamen beliebig niedrigviskos eingestellt werden kann, wodurch bei der Polymerisation hochwertige, lunkerfreie Polyamidformkörper erhalten werden.

Gegenstand der Erfindung ist ein Verfahren zur Herstellung von Polyamiden durch Polymerisation von Lactamen in Gegenwart von Katalysatoren und Aktivatoren sowie gegebenenfalls weiterer copolymerisierba- ren Komponenten, dadurch gekennzeichnet, daß als Aktivatoren Biuretgruppen-haltige Polyisocyanate aus nicht aromatischen Diisocyanaten, vorzugsweise aus aliphatischen Diisocyanaten mit dynamischen Viskositäten unter 12 000 mPa.s, vorzugsweise unter 5000 mPa.s, besonders bevorzugt unter 2000 mPa.s eingesetzt werden, die gegebenenfalls mit flüssigen N-Alkyllactamen abgemischt wurden.

Der Gegenstand der Erfindung wird in den Ansprüchen 1 bis 9 definiert.

Ein weiterer Gegenstand der Erfindung sind auch Biuretgruppen-haltige Polyisocyanate, gegebenenfalls im Gemisch mit flüssigen N-Alkyl-Lactamen, vorzugsweise N-Methylcaprolactam und/ oder N-Methylpyrrolidon, als Aktivatoren für die aktivierte anionische Polymerisation von Lactamen.

Die Herstellung Biuretgruppen-haltiger Isocyanate ist seit langem bekannt. Sie kann beispielsweise durch Reaktion von Diisocyanaten mit definierten Mengen Wasser (DAS 1 101 394) oder mit tert. Alkoholen (DOS 1 543 178) erfolgen. Auch Umsetzungen von Diisocyanaten mit Diaminen zur Herstellung von Biuretgruppen-haltigen Polyisocyanaten sind beschrieben worden (DOS 2 261 065, DOS 2 609 995, EP 0 003 505, A. Balewski et al, in "Die Angew. Makromol. Chem.", Bd. 131, S. 1 ff.). Kontinuierliche Herstellungsverfahren von Biuretgruppen-haltigen Polyisocyanaten mittels spezieller Addukt-bildender Mittel werden z. B. in der DOS 28 08 801 und DOS 30 30 655 beschrieben.

Je nach Reaktionsführung können Produkte mit unterschiedlicher Viskosität erhalten werden.

Die Verwendung von Biuretgruppen-haltigen Polyisocyanaten zur Herstellung von Polyurethan-Kunststoffen nach dem Isocyanat-Polyadditionsverfahren sowie zur Herstellung hochwertiger Beschichtungen, die bei Produkten aus nichtaromatischen Diisocyanaten auch wetter- und vergilbungsstabil sind, ist bekannt.

Völlig überraschend und nicht vorhersehbar war, daß Biuretgruppen-haltige Polyisocyanate aus nichtaromatischen Diisocyanaten überaus hochwertige Aktivatoren für die anionische Polymerisation von Lactamen darstellen, die bei leichter Handhabbarkeit zu sehr hochwertigen Polyamiden führen.

Geeignete Diisocyanate zur Herstellung der erfindungsgemäß einzusetzenden Biuretgruppen-haltigen Polyisocyanate sind Diisocyanate mit der allgemeinen Formel

$$Q(NCO)_2$$

in welcher Q für einen araliphatischen Kohlenwasserstoffrest mit $C_7$-$C_{15}$, insbesondere 8 Kohlenstoffatomen, einen aliphatischen Kohlenwasserstoffrest mit 2 bis 12 Kohlenstoffatomen, vorzugsweise von 4 bis 10 C-Atomen, oder einen cycloaliphatischen Kohlenwasserstoffrest mit 4 bis 15 Kohlenstoffatomen, vzw. von 6 bis 12 C-Atomen, steht.

Beispiele derartiger Diisocyanate sind Ethan-1,2-diisocyanat, Butan-1,4-diisocyanat, Hexamethylen-1,6-diisocyanat, 2-Methylpentan-1,5-diisocyanat, 2-Ethyl-butan-1,4-diisocyanat, Trimethylhexamethylendiisocyanate, 2-Methylnonamethylendiisocyanat, Decamethylendiisocyanat, Undecamethylendiisocyanat, Dodecamethylendiisocyanat, 1,4-Diisocyanatocylohexan, 1-Methyl-2,4-diisocyanato-cyclohexan, 4,4'-Diisocyanato-dicyclohexylmethane, 3,3,5-Trimethyl-5-isocyanatomethyl-cyclohexyl-isocyanat (IPDI), Isomerengemische von Bis-isocyanatomethyl-tricyclodecan, Xylylendiisocyanate sowie Gemische dieser Diisocyanate.

Bevorzugte Diisocyanate sind Hexamethylendiisocyanat, 2-Methylpentamethylen-diisocyanat (im Gemisch mit 2-Ethylbutan-1,4-diisocyanat), 4,4'-Diisocyanatodicyclohexylmethan und Isophorondiisocyanat sowie Gemische dieser Diisocyanate. Besonders bevorzugt werden Biuretgruppen-haltige Polyisocyanate aus Hexamethylendiisocyanat eingesetzt.

Die erfindungsgemäßen Aktivatoren sollen dynamische Viskositäten von max. 12.000 mPa.s, vzw. von max. 5000 mPa.s, besonders bevorzugt von <2000 mPa.s aufweisen und können problemlos und ohne nachteiligen Einfluß auf die Polymerisationsreaktion mit flüssigen N-Alkyllactamen weitgehend beliebig niedrigviskos eingestellt werden.

Als N-Alkyllactame eignen sich flüssige $C_1$-$C_{22}$-, vzw. $C_1$-$C_8$-Alkyl-N-substituierte Lactame mit 4 bis 13 Ringgliedern, vzw. mit 5-7 Ringgliedern.

Beispiele für erfindungsgemäß einzusetzende N-Alkyllactame sind N-Methylpyrrolidon, N-Methylpiperidon, N-Methyl-caprolactam, N-Methyllaurinlactam, N-Ethyl-pyrrolidon, N-Ethyl-caprolactam, N-Vinyl-pyrrolidon, N-Vinylcaprolactam, N-Isopropyl-caprolactam, N-Hexylcaprolactam und N-Octyl-caprolactam.

Vorzugsweise werden N-Methylpyrrolidon, N-Methylcaprolactam, N-Ethylcaprolactam und N-Vinylpyrrolidon, besonders bevorzugt N-Methylpyrrolidon und/oder N-Methylcaprolactam zur Erniedrigung der Viskosität der Biuretgruppen-haltigen Polyisocyanate eingesetzt.

Die N-Alkyllactame müssen nur in wenigen Fällen zu mehr als gleichen Gewichtsteilen den Biuretgruppen-haltigen Polyisocyanaten zugesetzt werden, in der Regel genügen 0-70, vzw. 0-50 Gew.-Teile N-Alkyllactam, bezogen auf 100 Gewichtsteile Polyisocyanat.

Die erfindungsgemäßen Aktivatoren sind infolge ihres extrem niedrigen Gehaltes an freiem Diisocyanat sowie ihres niedrigen Dampfdruckes ($<10^{-2}$ Torr bei 100°C, ca. 0,1 Torr bei 140°C) relativ gefahrlos handhabbar, physiologisch weniger bedenklich sowie auf handelsüblichen Pumpen ohne Schwierigkeiten zu fördern. Die Aktivatoren reagieren bei Raumtemperatur nicht merklich mit Wasser und sind im Falle einer Betriebsstörung oder Reinigung in häufig benutzten Spülmitteln wie z. B. Isopropanol trotz allmählicher Reaktion mit dem Alkohol leicht löslich.

Insbesondere ist auch die ausgezeichnete Lagerstabilität der erfindungsgemäßen Biuretgruppen-haltigen Polyisocyanate hervorzuheben.

Bei der Durchführung der anionischen, aktivierten Lactampolymerisation werden die Aktivatoren kontinuierlich oder diskontinuierlich in den üblichen Konzentrationen von bevorzugt 0,5-5 Gew.-%, bezogen auf den reinen Polyisocyanat-Anteil, der zu polymerisierenden Lactamschmelze zudosiert.

Als Katalysatoren können in den bekannten Konzentrationen alle Katalysatoren, die bei der anionischen Polymerisation von Lactamen Anwendung finden, eingesetzt werden, vorzugsweise Alkali- und Erdalkalilactamate wie Natriumlactamate, Natriumhydrid sowie auch latente Katalysatoren.

Die erfindungsgemäßen Aktivatoren eignen sich zur Polymerisation von Lactamen mit mindestens 5-Ringgliedern, wie z. B. α-Pyrrolidon, ε-Caprolactam, C-substituierte Caprolactame, Laurinlactam oder von Gemischen der genannten Lactame.

Insbesondere eignen sich die erfindungsgemäßen Aktivatoren auch zur Herstellung von Polyamid-Blockcopolymeren, z. B. durch Polymerisation von ε-Caprolactam unter Einbau von 1-30 Gew.-% Polyetherweichsegmenten über aminoterminierte Polyether mit Funktionalitäten von mindestens 3 und Molgewichten von mindestens 2000, wobei durch Einsatz der erfindungsgemäßen Biuretgruppen-haltigen Polyisocyanat-Aktivatoren sehr viel bessere Phasentrennungen zwischen der Elastomerphase und der Hartsegmentphase erzielt werden können, die weit verbesserte mechan. Gebrauchseigenschaften von aus diesen Polyamidblockcopolymeren hergestellten Formteilen ermöglichen.

Ganz besonders bevorzugt wirken die erfindungsgemäß einzusetzenden Biuretgruppen-haltigen Polyisocyanate als Aktivatoren in Rezepturen für Blockcopolyamide aus ε-Caprolactam und 8-20 Gew`-% Weichsegmenten (Polyethersegmenten).

Die Aktivatoren können bei jeder bekannten Verfahrensweise der aktivierten anionischen Polymerisation von Lactamen und gegebenenfalls Weichsegmenten, vzw. bei kontinuierlichen Verfahrensweisen eingesetzt werden.

So können sie bei der Halbzeugherstellung nach dem Verfahren des drucklosen Gießens verwendet werden. Hierbei werden zwei getrennte, mit Katalysator bzw. Aktivator versetzte Lactamschmelzen hergestellt, die unmittelbar nach ihrer Vereinigung und Durchmischung in eine Gießform eingebracht werden. Die Polymerisation wird üblicherweise bei Temperaturen zwischen 140 und 200°C ausgeführt, wobei das entstehende Polyamid die Gestalt der Form annimmt. Die Aktivatoren können bei dem Rotationsgußverfahren eingesetzt werden, bei dem eine polymerisationsfähige Schmelze in eine um zwei aufeinander in einem Winkel stehenden Achsen rotierende Form eingebracht und die Polymerisation durch Aufheizen eingeleitet wird.

Weitere Beispiele für Verfahrenstechniken, in denen die erfindungsgemäß aktivierte anionische Polymerisation verwendet wird, sind der Rollguß und die Polymerisation im Zylinder einer Spritzgußmaschine.

Besonders bevorzugt können die erfindungsgemäßen Aktivatoren bei der Herstellung von Polyamidblockcopolymeren mit Aminopolyether-Weichsegmenten durch anion. Polymerisation von ε-Caprolactam in Extrudern bei Temperaturen von 90 bis 300°, vorzugsweise von 100 bis 250°, besonders bevorzugt von 110 bis 1650°, eingesetzt werden, wobei die entstehenden Produkte als Stränge aus der Schneckenmaschine ausgetragen und nach bekannten Kunststoff-Technologie über die Granulatform weiterverarbeitet werden können.

Beispiele 1 - 6

A) Durchführung der Polymerisation

Die Gesamtmenge an ε-Caprolactam wird unter $N_2$ auf zwei Behälter gleichmäßig verteilt und auf ca. 100°C temperiert. Einer Hälfte mischt man die notwendige Menge Na-Lactamat als Katalysator in Form einer 80 %igen Lösung in Caprolactam zu, der anderen die geeignete Menge des jeweiligen Biuret-Polyisocyanat-Aktivators (I-IV). Mittels Dosierpumpen werden die Schmelzen im Verhältnis 1:1 in einem Mischkopf vereinigt und in ein auf 180°C geheiztes Rotationswerkzeug mit den Maßen 300 x 200 x 180 mm eingespeist. Nach der Eingabe von 1600 g reaktiver Lactamschmelze wird die Zufuhr unterbrochen. Unter biaxialer Rotation des Werkzeuges, wobei um die Primärachse mit Drehzahlen von 25 Min$^{-1}$ und um die Sekundärachse mit Drehzahlen von 10 Min$^{-1}$ rotiert wird, erzeugt man einen Polyamidhohlkörper mit einer Wanddicke von 4 mm. Die Polymerisation ist nach 3 Min. beendet und nach einer Kühlzeit von 1 Min. an der Luft wird der Hohlkörper entnommen.

Die Hohlkörper werden 24 Stunden in einem Normklima (23°C, 50 % relative Luftfeuchtigkeit) gelagert. Aus der Wand der Hohlkörper werden Prüfkörper in Gestalt von Normkleinstäben zur Messung der Viskositäten (nach verschiedenen Methoden) und zur Bestimmung von mechan. Eigenschaften spangebend herausgearbeitet.

Die exakten Rezepturen (Angabe in Gew.-%) sowie bestimmte Eigenschaften der Polyamide sind in Tabelle 1 zusammengefaßt.

B) Eingesetzte Aktivatoren

I. Biuret-modifiziertes Polyisocyanat auf Basis Hexamethylen-1,6-diisocyanat, NCO-Gehalt 22,0 %, Viskosität bei 23°: ca. 11000 mPa.s ("Desmodur N" 100®, Bayer AG)
II. Wie I, NCO-Gehalt 23,0 %, Viskosität 2500 mPa.s ("Desmodur N 3200"®, Bayer AG)
III. Biuret-modifiziertes Polyisocyanat auf Basis Tetramethylendiisocyanat (analog Bsp. 4 der DOS 28 08

4

801), NCO-Gehalt 28,2 %.

IV. Biuret-modifiziertes Polyisocyanat auf Basis Isophorondiisocyanat (analog Bsp. 12 der DOS 28 08 801); NCO-Gehalt 17,4 %. Viskosität bei 50°C: 2900 mPa.s

V. (Zum Vergleich):

Allophanat-modifiziertes Polyisocyanat auf Basis Hexamethylen-1,6-diisocyanat, auf n-Butanol, NCO-Gehalt 17,3 %, Viskosität bei 25°C: 160 mPa.s (Bsp. 1 der DOS 27 46 702).

## Verdünnung von Aktivatoren mit N-Alkyllactamen

| Produkt | Verdünner | Mengenverhältnis I-IV/Verdünner (Gew.-%) | Viskosität bei 23° (mPa.s) |
|---------|-----------|---------------------------------|---------------------------|
| I A | | 90 : 10 | 2300 |
| I B | N-Methyl- | 75 : 25 | 270 |
| I C | pyrrolidon | 65 : 35 | 120 |
| I D | | 60 : 40 | 90 |
| I E | N-Methyl- | 75 : 25 | 520 |
| I F | caprolactam | 60 : 40 | 140 |
| II A | N-Methyl- | 75 : 25 | 210 |
| II B | pyrrolidon | 70 : 30 | 120 |
| II A | N-Me-caprolactam | 70 : 30 | 300 |
| II B | N-Vinyl-caprolactam | 70 : 30 | 340 |
| IV A | N-Methyl-pyrrolidon | 60 : 40 | 350 |

C) Bestimmung der Qualität der PA-Produkte

1. Ermittlung der Farbdurchschlagszeit gemäß TRbF 413, Ausgabe 3, 1978, Punkt 2.112 ("Schwefelsäuretest")

Gemäß den "Techn. Regeln für brennbare Flüssigkeiten (TRbF)" sind Richtlinien vorgeschrieben, die Fertigteile aus durch aktiv. anion. Polymerisation von $\epsilon$-Caprolactam hergestellte Polyamide erfüllen müssen.

Der zur Bestimmung ausreichend hoher Molgewichte vorgeschriebene "Schwefelsäure-Test" wird wie folgt durchgeführt.

Ermittlung der Farbdurchschlagzeit

1) Aus der Tankwandung werden senkrecht zu ihr zylindrische Proben von 3 mm Durchmesser und (4 ± 0,5) mm Höhe entnommen.

2) Für Proben mit einer Höhe von weniger als 3,5 mm ist die Farbdurchschlagzeit gesondert festzulegen.

3) Die Probekörper dürfen höchstens einen Feuchtigkeitsgehalt von 0,7 % aufweisen.

4) Die Prüfung erfolgt in Probegläsern mit (4 ± 0,1) mm Innendurchmesser und ca. 80 mm Länge. Als Prüfmedium dienen

1. 96 %ige Schwefelsäure und

2. 96 %ige Schwefelsäure, blaugrün gefärbt durch Zusatz von 0,1 g/l Diphenylamin und 0,1 g/l Salpetersäure 65 %ig.

5) Zur Durchführung der Prüfung wird das Probeglas bis etwa 30 mm Höhe mit ungefärbter Schwefelsäure gefüllt. Der zylindrische Probekörper wird mittels Glasstab bis unter den Flüssigkeitsspiegel getaucht (auf Blasenfreiheit in der Schwefelsäure ist zu achten) und das Probeglas sodann in ein Wärmebad von (90 ± 2)°C eingebracht. Nach einer Vorquellzeit von 3 Stunden wird ca. 20 mm hoch gefärbte Schwefelsäure überschichtet und das Probeglas weiter im Wärmebad belassen.

6) Die Probe ist ausreichend polymerisiert, wenn sich nach insgesamt 5,5 Stunden (3 Stunden Vorquellzeit und 2,5 Stunden Prüfzeit) noch eine deutliche Abgrenzung zwischen gequollenem Probekörper und gefärbter Schwefelsäure erkennen läßt.

7) Die gefärbte Schwefelsäure darf nicht in die untere ungefärbte Schwefelsäure eindringen. Kein Einzelwert der Farbdurchschlagzeit darf unter 5,5 Stunden betragen.

In Tabelle 1 ist unter der Spalte "$H_2SO_4$-Test" die Erfüllung/Nichterfüllung dieses Tests mit +/- neben der gemessenen Zeit bis zum beginnenden Farbdurchschlag angegeben.

2. Verhalten bei spangebender Bearbeitung ("VSB-Test")

Bei spangebender Bearbeitung von Halbzeugen mit techn. üblicher hoher Schnittgeschwindigkeit zeigen Teile aus durch aktiv. anion. Polymerisation von $\epsilon$-Caprolactam hergestellten Polyamiden je nach Molgewicht mehr oder weniger duktiles Verhalten.

Bei weniger guten Produkten entstehen durch spangebende Bearbeitung an der Oberfläche Mikrokerben, die das mechan. Niveau des fertigen Bauteils signifikant beeinträchtigen (Bruchempfindlichkeit bei hoher Schlagbeanspruchung). Durch das nicht duktile Verhalten kann kein glatt abfließender Span erhalten werden (Beurteilung in Tabelle 1 als (-)).

Sehr hochmolekulare Produkte zeigen dagegen duktiles Verhalten, wobei der Span glatt abfließt. Die Fertigteile zeigen in der Praxis hohe mechan. Belastbarkeit (Beurteilung in Tabelle 1 als (+)).

Tabelle 1

| Bsp. | Katalysator (Gew. %) | Aktivator Typ | Menge (Gew. %) | $t_i$[x) | Eigenschaften der Polyamide a) $\eta_{rel}$ | b) | $H_2SO_4$-Test | VSB-Test |
|---|---|---|---|---|---|---|---|---|
| 1 | 1,5 | I | 0,4 | 6'30" | unlösl. | unlösl. | (+) 7,5 h | + |
| 2 | 1,5 | I D | 0,6 | 6'40" | " | " | (+) 7,5 h | + |
| 3 | 1,5 | II C | 0,5 | 6'30" | " | " | (+) 8,5 h | + |
| 4 | 1,5 | III | 0,3 | 6'20"' | " | " | (+) 8 h | + |
| 5 | 1,5 | IV A | 0,5 | 7'20" | " | " | (+) 8,5 h | + |
| 6 | 1,5 | I | 0,0 | 6'30" | " | " | (+) 8 h | + |
| Vergl. versuch | 1,5 | V | 0,6 | 7'10" | 6,3 | 4,79 | (-) 3,5 h | - |

a) 1 % des PA in m-Kresol bei 25°

b) Iso R 307 in Ameisensäure

x) Die Polymerisationszeit $t_i$ wurde in Versuchen im 100 g Maßstab bestimmt. $t_i$ ist die Zeit vom Eintauchen der kompletten Reaktionsmischung in das Heizbad von 180° C bis zu beginnenden Viskositätsanstieg.

Beispiel 7

41,7 g ε-Caprolactam, 12 g eines Aminopolyethergemisches mit einer durchschnittlichen Funktionalität von 3,2 - hergestellt durch Alkoxylierung von Trimethylolpropan mit Propylenoxid und anschließende Umsetzung mit Ammoniak unter Druck (Aminierungsgrad: 100 %, Mol-Gew. 4800) sowie durch analoge Alkoxylierung von Pentaerythrit und anschließende Aminierung (Aminierungsgrad: 95 %, Mol-Gew. 6400) und 4,0 g einer 20 %igen Lösung von Na-Lactamat in $\epsilon$-Caprolactam werden unter $N_2$-Schutzgas auf 115°C erhitzt (Schmelze A).

Parallel dazu werden in einem zweiten Vorratsgefäß 40,0 g $\epsilon$-Caprolactam mit 2,3 g einer Biuret-modifizierten Polyisocyanats auf Basis von Hexamethylenidiisocyanat (NCO-Gehalt: 23,0 %, Viscosität bei 23°: 2500 mPa.s) ebenfalls auf 110°C erhitzt (Schmelze B).

Die beiden Schmelzen werden gleichzeitig einem auf 140°C erhitzten Polymerisationsgefäß zugeführt und durch Rühren gut vermischt, wobei bereits nach 60 Sekunden die Polymerisation einsetzt (meßbar über einen an ein Viskosimeter angeschlossenen Rührer), die nach weiteren 80 Sekunden beendet ist.

Man erhält einen sehr homogenen, farbhellen Polymer-Block mit typischer Polyamid-Eigenfarbe, einer sehr guten Oberfläche. Nach Kühlung auf -30°C läßt sich der Block, eingespannt in einen Schraubstock mit Hammer und Meißel nicht zerstören.

Aus dem Polymerblock wurden Probekörper zur Bestimmung mechanischer Eigenschaften ausgeschnitten.

Der mit Methanol extrahierbare niedermolekulare Anteil beträgt 1,6 %. Bestimmte Polymereigenschaften sind in Tabelle 2 aufgeführt.

Beispiele 8 - 12

Analog der Versuchsdurchführung nach Beispiel 7 wurden verschiedene Mengen aminoterminierter Polyether in Kombination mit unterschiedlichen Biuret-Polyisocyanat-Aktivatoren eingesetzt.

Rezepturen (in Gew.-%) und einige Produkteigenschaften sind in Tabelle 2 aufgeführt.

Tabelle 2

Zusammensetzung in Gew.-%

| Beispiel: | 7 | 8 | 9 | 10 | 11 | 12 |
|---|---|---|---|---|---|---|
| ε-Caprolactam | 81,7 | 77,6 | 72,2 | 77,7 | 76,1 | 77,9 |
| Katalysator x) | 4 | 5 | 5 | 5 | 5 | 5 |
| Aktivator I | 2,3 | 2,4 | 2,8 | - | - | - |
| Aktivator II | - | - | - | 2,3 | - | - |
| Aktivator IV | - | - | - | - | 3,3 | - |
| Aktivator III | - | - | - | - | - | 2,4 |
| Aminopolyether A | 12 | 15 | 20 | 15 | 15 | 15 |
| Eigenschaften | | | | | | |
| $a_k$ (23°C, kJ/m²) | 57 a) | 70 a) | 64 a) | 53 a) | 45 a) | 60 a) |
| $a_k$ (-20°C, kJ/m²) | 21 | 38 a) | 30 a) | 35 a) | 27 | 32 a) |
| Kugeldruckhärte (N/mm²) | 85 | 75 | 63 | 86 | 72 | 79 |

x) wie in Bsp. 7 beschrieben    a) angebrochen

**Patentansprüche**

1. Verfahren zur Herstellung von Polyamiden durch anionisch aktivierte Polymerisation von Lactamen in Gegenwart von Katalysatoren und Aktivatoren, sowie gegebenenfalls weiteren copolymerisierbaren Komponenten, dadurch gekennzeichnet, daß man biuretgruppenhaltige Polyisocyanate auf Basis von

EP 0 167 907 B1

nicht-aromatischen Diisocyanaten und unter Zumischung von 0 bis 70 Gew.-Teilen an flüssigen N-Alkyllactamen, bezogen auf 100 Gew.-Teile biuretgruppenhaltiges Polyisocyanat, und mit dynamischen Viskositäten von maximal 12 000 mPa.s, als Aktivatoren in Gegenwart von Katalysatoren und gegebenenfalls von geeigneten Elastomer-Weichsegmenten einsetzt.

2. Verfahren nach Anspruch 1, dadurch gekennzeichnet, daß die biuretgruppenhaltigen Polyisocyanate aus Diisocyanaten $Q(NCO)_2$, in welcher Q für einen $C_7$-$C_{15}$-araliphatischen Kohlenwasserstoffrest, einen $C_2$-$C_{12}$-aliphatischen Kohlenwasserstoffrest oder einen $C_6$-$C_{12}$-cycloaliphatischen Kohlenwasserstoffrest steht, hergestellt werden.

3. Verfahren nach Ansprüchen 1 und 2, dadurch gekennzeichnet, daß die Viskosität der biuretgruppenhaltigen Polyisocyanate oder ihrer Gemische mit 0 bis 50 Gew.-Teilen N-Alkyllactamen pro 100 Gew.-Teilen Polyisocyanaten dynamische Viskositäten von maximal 5000 mPa.s beträgt.

4. Verfahren nach Ansprüchen 1 bis 3, dadurch gekennzeichnet, daß als N-Alkyllactame N-Methylpyrrolidon, N-Methylpiperidon, N-Ethylpyrrolidon, N-Methylcaprolactam, N-Methyl-laurinlactam, N-Ethylcaprolactam, N-Vinylpyrrolidon, N-Vinylcaprolactam, N-Isopropylcaprolactam, N-Hexylcaprolactam oder N-Octylcaprolactam eingesetzt werden.

5. Verfahren nach Ansprüchen 1 bis 4, dadurch gekennzeichnet, daß Gemische der biuretgruppenhaltigen Polyisocyanate mit N-Methylpyrrolidon mit Viskositäten von 90 bis 2300 mPa.s bei 23°C eingesetzt werden.

6. Verfahren nach Ansprüchen 1 bis 5, dadurch gekennzeichnet, daß die Aktivatoren kontinuierlich oder diskontinuierlich in Mengen von 0,5 bis 5 Gew.-%, bezogen auf den reinen Polyisocyanat-Anteil, der zu polymerisierenden Lactamschmelze zudosiert werden.

7. Verfahren nach Ansprüchen 1 bis 6, dadurch gekennzeichnet, daß als zu polymerisierendes Lactam $\epsilon$-Caprolactam verwendet wird.

8. Verfahren nach Ansprüchen 1 bis 7, dadurch gekennzeichnet, daß die Aktivatoren zur Herstellung von Polyamid-Blockcopolymeren mit eingebauten Weichsegmenten durch aktivierte anionische Polymerisation von Lactamen in Gegenwart von Katalysatoren und Aktivatoren und geeigneten Elastomer-Weichsegmenten eingesetzt werden.

9. Verfahren nach Ansprüchen 1 bis 8, dadurch gekennzeichnet, daß als Weichsegmente 1 bis 30 Gew.-% Polyetherweichsegmente aus aminoterminierten Polyethern mit Funktionalitäten von mindestens 3 und Molekulargewichten von mindestens 2000 eingesetzt werden.

**Claims**

1. A process for the production of polyamides by anionically activated polymerization of lactams in the presence of catalysts and activators and, optionally, other copolymerizable components, characterized in that biuret polyisocyanates based on non-aromatic diisocyanates in admixture with 0 to 70 parts by weight liquid N-alkyl lactams, based on 100 parts by weight biuret polyisocyanate, and having dynamic viscosities of at most 12,000 mPa.s are used as activators in the presence of catalysts and optionally suitable elastomer soft segments.

2. A process as claimed in claim 1, characterized in that the biuret polyisocyanates are produced from diisocyanates $Q(NCO)_2$, in which Q is an araliphatic $C_{7-15}$ hydrocarbon radical, an aliphatic $C_{2-12}$ hydrocarbon radical or a cycloaliphatic $C_{6-12}$ hydrocarbon radical.

3. A process as claimed in claims 1 and 2, characterized in that the biuret polyisocyanates or mixtures thereof with 0 to 50 parts by weight N-alkyl lactams per 100 parts by weight polyisocyanates have dynamic viscosities of at most 5,000 mPa.s.

4. A process as claimed in claims 1 to 3, characterized in that N-methyl pyrrolidone, N-methyl piperidone, N-ethyl pyrrolidone, N-methyl caprolactam, N-methyl lauric lactam, N-Methyl caprolactam, N-vinyl

10

pyrrolidone, N-vinyl caprolactam, N-isopropyl caprolactam, N-hexyl caprolactam or N-octyl caprolactam is used as the N-alkyl lactam.

5. A process as claimed in claims 1 to 4, characterized in that mixtures of the biuret polyisocyanates with N-methyl pyrrolidone having viscosities of 90 to 2,300 mPa.s at 23°C are used.

6. A process as claimed in claims 1 to 5, characterized in that the activators are continuously or discontinuously added to the lactam melt to be polymerized in quantities of 0.5 to 5% by weight, based on the pure polyisocyanate component.

7. A process as claimed in claims 1 to 6, characterized in that $\epsilon$-caprolactam is used as the lactam to be polymerized.

8. A process as claimed in claims 1 to 7, characterized in that the activators are used for the production of polyamide block copolymers containing incorporated soft segments by activated anionic polymerization of lactams in the presence of catalysts and activators and suitable elastomer soft segments.

9. A process as claimed in claims 1 to 8, characterized in that 1 to 30% by weight polyether soft segments of amino-terminated polyethers having functionalities of at least 3 and molecular weights of at least 2,000 are used as the soft segments.

**Revendications**

1. Procédé pour la préparation de polyamides par polymérisation anionique activée de lactames en présence de catalyseurs et d'activateurs, ainsi qu'éventuellement d'autres composants copolymérisables, **caractérisé en ce qu'**on met en oeuvre des polyisocyanates contenant des groupes biuret, à base de diisocyanates non aromatiques, et en mélangeant avec de 0 à 70 parties en poids de N-alkyl-lactames liquides, rapportées à 100 parties en poids de polyisocyanate contenant des groupes biuret, et qui possèdent des viscosités dynamiques de maximum 12.000 mPa.s, comme activateurs, en présence de catalyseurs et éventuellement de segments de ramollissement appropriés d'élastomères.

2. Procédé selon la revendication 1, **caractérisé en ce qu'**on prépare les polyisocyanates contenant les groupes biuret à partir de diisocyanates $Q(NCO)_2$, où Q représente un radical d'hydrocarbure araliphatique en $C_7$-$C_{15}$, un radical d'hydrocarbure aliphatique en $C_2$-$C_{12}$ ou un radical d'hydrocarbure cycloaliphatique en $C_6$–$C_{12}$.

3. Procédé selon les revendications 1 et 2, **caractérisé en ce que** la viscosité des polyisocyanates contenant des groupes biuret ou encore de leurs mélanges avec de 0 à 50 parties en poids de N-alkyl-lactames par 100 parties en poids de polyisocyanates, s'élève au maximum à 5000 mPa.s en tant que viscosité dynamique.

4. Procédé selon les revendications 1 à 3, **caractérisé en ce qu'**on met en oeuvre, comine N-alkyl-lactames, la N-méthylpyrrolidone, la N-méthylpipéridone, la N-éthylpyrrolidone, le N-méthylcaprolactame, le N-méthyllauryllactame, le N-éthylcaprolactame, la N-vinylpyrrolidone, le N-vinylcaprolactame, le N-isopropylcaprolactame, le N-hexylcaprolactame ou le N-octylcaprolactame.

5. Procédé selon les revendications 1 à 4, **caractérisé on ce qu'**on met on oeuvre des mélanges de polyisocyanates contenant des groupes biuret avec de la N-méthylpyrrolidone, présentant des viscosités de 90 à 2.300 mPa.s à 23°C.

6. Procédé selon les revendications 1 à 5, **caractérisé en ce qu'**on procède à une addition dosée des activateurs en continu ou en discontinu, dans des quantités de 0,5 à 5% en poids, rapportées sur la fraction de polyisocyanate pur, à la masse fondue de lactame à polymériser.

7. Procédé selon les revendications 1 à 6, **caractérisé on ce qu'**on utilise, comme lactame à polymériser, le $\epsilon$-caprolactame.

8. Procédé selon les revendications 1 à 7, **caractérisé on ce qu'**on met en oeuvre les activateurs pour la préparation de copolymères séquencés de polyamide, dans lesquels sont incorporés des segments de ramollissement, par polymérisation anionique activée de lactames en présence de catalyseurs et d'activateurs et de segments de ramollissement appropriés d'élastomères.

9. Procédé selon les revendications 1 à 8, **caractérisé en ce que,** comme segments de ramollissement, on met en oeuvre de 1 à 30% en poids de segments de ramollissement de polyéthers constitués par des polyéthers à terminaisons amino avec des fonctionnalités d'au moins 3 et des poids moléculaires d'au moins 2.000.